# EUROPEAN PATENT APPLICATION

(11) **EP 3 050 421 A1**
(43) Date of publication of application: **03.08.2016**
(21) Application number: 15153113.4
(22) Date of filing: 29.01.2015
(51) Int. Cl.: A01C 11/02

(54) **Apparatus for planting seedlings of an agricultural plant**

(71) Applicant: BASF SE, 67056 Ludwigshafen am Rhein (DE)
(72) Inventor: The designation of the inventor has not yet been filed
(74) Representative: Reitstötter Kinzebach

(57) **Abstract**

The present invention relates to an apparatus (1) for planting seedlings (44) of an agricultural plant. In particular, the apparatus (1) is adapted for planting sugar cane seedlings (44). The apparatus (1) comprises means (2) for moving the apparatus (1) in a first direction (V_{A}) over a field with soil in which the seedlings (44) are to be planted. Further, the apparatus (1) comprises a seedling conveying device (7) for conveying individual seedlings (44) at a defined time interval to a seedling pushing mechanism (39-43), said seedling pushing mechanism (39-43) being adapted to push the seedling (44) into a second direction (V_{P}) that is opposite to the first direction (V_{A}), wherein the action of the seedling conveying device (7) and the action of the seedling pushing mechanism (39-43) are synchronised with each other. Moreover, the invention relates to the use of this apparatus (1) for planting a seedling (44) of a graminaceous plant, in particular the seedling (44) of a sugar cane plant.

## Description

The present invention relates to an apparatus for planting seedlings of an agricultural plant. In particular, the apparatus is adapted for planting sugar cane seedlings. Moreover, the invention relates to the use of this apparatus for planting a seedling of a graminaceous plant, in particular the seedling of a sugar cane plant.

The seed of sugar cane is a dry one-seeded fruit or caryopsis formed from a single carpel, the ovary wall pericarp being united with the seed-coat testa. Disadvantageously, the seed of sugar cane only germinates under specific environmental characteristics, such as a constant warm and humid climate conditions. Such climatic conditions are not found everywhere sugar cane is grown and therefore germination of sugar cane seed is not always guaranteed. For commercial agriculture, the seed of a sugar cane is not sown, but instead, the cane is propagated vegetatively by planting a stem segment or part of a stalk or culm.

The stem of sugar cane, as well as the stem of graminaceous plants, comprises several nodes, from which new plants grow. The traditional planting process of sugar cane involves the reservation of an area of the crop to be used as a source of plants for replanting, since the nodes are comprised in the stem. The plants used for replanting are harvested and then cut in segments of approximately 20 to 50 cm, so that at least two nodes are present in each stem segment sett. Cutting the stems is needed to break apical dominance that otherwise causes poor germination when using full length uncut stems. The segments are cut to have at least two buds or at least two nodes; every node gives generally rise to one single bud to assure germination, because not every bud germinates.

In WO 91/14356 A1 a billet planter is described. The planter includes a cutting apparatus which is adapted to cut the cane stalks into billets and to feed them to the delivery chute. The planter is supported on wheels and is adapted to be hitched to a tractor's three point linkage by the hitch assembly.

Furthermore, US 4,450,778 describes a sugar cane billet planter. The billet planter described therein includes a furrow opening assembly and a fertilizer distributor. It also comprises a billet metering mechanism that includes a billet delivery assembly.

Moreover, US 4,314,514 describes a sugar cane planter including a main frame which may be hitched to the rear of a tractor. It further comprises a furrow plough for opening a furrow being mounted under the main frame. Furthermore, the planter comprises a hopper that is capable of receiving a large quantity of cane setts to be planted. The cane setts are then discharged so that they enter the furrow.

Moreover, EP 0 283 701 A1 describes a method for the planting of plants, wherein a furrow is formed by means of a plowshare and plants are dropped into the furrow. In the method, the plant is supported at the landing stage by means of a rearwardly directed liquid or gas jet so as to prevent tilting of the plant forwards.

Current machines used to cut sugar cane segments are not able to identify any characteristic in the stem, and therefore the precise position of the cut sites is determined at random. After cutting, the setts, which have one or more nodes, are disposed horizontally, over one another in furrows of the ploughed soil, which are generally wide at ground level and 40 to 50 cm wide and 30 to 40 cm deep, and then lightly covered with soil.

Although this plantation technique is still being used until today, the whole process is relatively inefficient because many segments of two to four nodes have to be used to guarantee the germination. The consequence is that a large area for re-planting needs to be used, and therefore area that could be employed for the crop and production of alcohol or sugar has to be reserved for re-planting. Thus, there is a necessity to increase the efficiency of the planting technique of sugar cane.

Furthermore, it is known to plant seedlings of sugar cane plants. However, the seedlings are much more sensitive so that known planters for sugar can bullits or setts cannot be used.

It is therefore the object of the present invention to provide an apparatus for planting seedlings of an agricultural plant that can plant the seedlings efficiently and gentle so that the seedlings are not damage by the planting procedure.

According to the invention, this object has been achieved by the apparatus as defined in claim 1. Further features of this apparatus are defined in the dependent claims.

The apparatus for planting seedlings of an agricultural plant according to the present invention comprises means for moving the apparatus in a first direction over a field with soil in which the seedlings are to be planted. Further, the apparatus comprises a seedling conveying device for conveying individual seedlings at a defined time interval to a seedling pushing mechanism, said seedling pushing mechanism being adapted to push the seedling into a second direction that is opposite to the first direction, wherein the action of the seedling conveying device and the action of the seedling pushing mechanism are synchronised with each other. Thereby, synchronisation is not necessarily understood as a simultaneous movement. It indicates rather a coordination of several processes, in the present case to make sure that the seedlings are planted at the right time - and therefore at the right position - on the soil and that the push is executed in the right moment. Further, the velocity of the push may be adjusted to the movement of the apparatus.

This means that the continuous movement of the apparatus is converted to the intermittent action of planting individual seedlings: At a defined time interval, individual seedlings are conveyed to the seedling pushing mechanism, which then pushes the seedling to place it at the right distance to the previous one. This means that the pushing mechanism may move back and forth according to the movement of the apparatus to reach the seedling and accelerate it to the right velocity relative to the apparatus and push it onto the soil.

In particular, the apparatus of the present invention is not adapted for planting stalks or bullits, but for planting seedlings. The apparatus is able to deliver the seedlings and provide all meanings for a high survival rate of the planted seedlings. Notably, the seedling pushing mechanism ensures that the seedlings do not fall over as they reach the soil. This is due to the seedling pushing mechanism, which accelerates the seedling in the second direction that is opposed to the first direction of the movement of the apparatus. Thereby the velocity of the apparatus relative to the soil can be compensated and the seedling reaches the soil with a low or zero horizontal speed relative to the soil. It is necessary to synchronise the processes of conveying the seedling and pushing it to treat the sensitive parts of the plants with care and place the seedling on the soil in the defined time interval.

The seedlings may be planted in a linear fashion by moving the apparatus over the field. This will yield a linear harvesting at the end of the cycle, thereby reducing damage to the plants and increasing crop yield. Advantageously, the apparatus can move with high velocity over the field without causing the planted seedlings to fall over as they reach the soil. Furthermore, the apparatus provides a fully integrated planting mechanism and seedling treatment for germinated seedlings.

According to an embodiment of the apparatus, said seedling pushing mechanism is adapted to push the seedling in the second direction with the absolute value of the apparatus' velocity relative to the soil. This compensates the velocity of the apparatus and ensures that the seedling reaches the soil with a horizontal velocity of zero relative to the soil. Advantageously, it is less likely that the seedling will fall over.

According to another embodiment, the apparatus comprises coupling means to couple said seedling conveying device and said seedling pushing mechanism with said means for moving the apparatus, such that seedlings are planted in the soil at a defined spatial distance. This coupling means coordinate the movement of the apparatus and the units that execute the actual planting process. Therefore, seedlings can advantageously be planted at a defined spatial distance on the soil, although the apparatus may move with varying velocity relative to the soil.

According to another embodiment of the apparatus, said coupling means constitute a mechanical transmission unit. In this case, the movement of the apparatus, specifically its velocity, is directly coupled to the units that control the process of conveying the individual seedlings and pushing them. This allows implementing a synchronised action of conveying and pushing.

According to a further embodiment of the apparatus, said coupling means constitute an electronic transmission unit and a motor unit. Thus, the coupling does not require further mechanical elements like levers, rods, gears and/or shafts. Instead, signals about the movement are transmitted electronically and a motor translates this into a synchronised movement of the seedling conveying device and the seedling pushing mechanism.

According to the invention the apparatus may further comprise a horizontal plate. In this case, said seedling conveying device is adapted to put the seedlings on the horizontal plate, and said horizontal plate is located relative to said seedling pushing device so that the seedling pushing mechanism pushes the seedling off said horizontal plate. In particular, the horizontal plate is arranged essentially parallel to the soil. By placing the seedlings on the plate before pushing them off the plate may ensure that the seedlings do not build up a high vertical speed. This decreases the risk of falling over on the soil.

Said seedling pushing mechanism may further comprise a vertical plate, wherein said seedling pushing mechanism is adapted to move said vertical plate horizontally in the second direction. Like this, the seedling can be pushed in a way that does not introduce another movement, e.g., a rotation of the seedling, and further ensures that the seedling does not fall over on the soil.

According to the invention said seedling pushing mechanism can comprise a pantographic device that is driven by an eccentric disk plate arrangement comprising two rotating disks being arranged eccentrically to each other and coupled by a linkage. The eccentric arrangement converts the rotation of the disks to a translatory movement and thereby allows driving the seedling pushing mechanism. A pantograph device provides a mechanical linkage connected in a manner based on parallelograms so that the movement of one part produces identical, scaled movements of the other part. To synchronise the planting and the movement of the apparatus, the eccentric disk arrangement converts the continuous rotation to a periodic translation. To adjust this to the movement of the apparatus, it can be coupled to the means for moving the apparatus. The eccentric disk arrangement allows a periodic movement of the seedling pushing mechanism, which moves forward to deliver the push and backward to go back to its starting position.

According to an embodiment of the apparatus, said seedling conveying device comprises a rotating barrel with a plurality of cavities for taking up seedlings. The rotation of the barrel is adapted to convey seedlings individually at said defined time interval, which is again synchronised with the movement of the apparatus. Therefore, the seedlings are advantageously planted at a fixed space interval. For this, the rotation speed can be adjusted so that the cavities reach the position from where the seedlings are taken one after another with a defined frequency. At this position, the rotation can be stopped to allow the seedling conveying device to convey a seedling in the cavity to the seedling pushing mechanism and then continue the rotation. The seedling conveying device can for example comprise a plurality of tubes that are arranged in a round fashion. Like this, the seedlings are organized in a carousel.

According to a further embodiment of the invention, the individual seedlings are conveyed by said seedling conveying device by falling from said cavities towards said seedling pushing mechanism. Specifically when the cavities comprise tubes, in which the seedlings are put prior to planting them, the rotation of the carousel can allow only one seedling at a defined time to fall down towards the seedling pushing mechanism, which ensures that the seedling is placed upright on the soil.

According to the invention, the apparatus can further comprise a furrow opener for automatically creating a furrow in the field when the apparatus is moved over the field. This furrow opener is placed in front of the seedling conveying device and the seedling pushing mechanism and prepares the soil for planting the seedlings. By combining those two units in one apparatus, the planting procedure is made more efficient and the positioning of the seedlings relative to the furrow can be achieved very precisely, since the furrow opener and the seedling conveying device can be arranged at fixed positions relative to each other.

According to the invention the furrow opener may comprise a ground levering device. This device may be made with a non-stick material, in particular, having ultra high molecular weight (UHMW).

The apparatus according to the invention can further comprise a furrow compactor that is adapted to close the furrow with soil and to compact the soil surrounding the seedling in the closed furrow. This adds one more step of the planting process and allows efficient planting by the apparatus. Again, the defined position of the furrow opener relative to the rest of the apparatus allows very defined conditions for the planting process and helps to reach consistent results.

Moreover, the apparatus can comprise a coupling mechanism that couples said seedlings conveying device and said furrow compactor. According to an embodiment of the apparatus according to the invention said coupling mechanism urges said furrow compactor against the soil besides the furrow so that the seedlings conveying device coupled to the furrow compactor has a constant height over the soil when the apparatus is moved over the field.

According to a further embodiment of the apparatus according to the invention said coupling mechanism urges said furrow compactor against the soil so that the furrow compactor compacts the soil surrounding the seedling with constant strength when the apparatus is moved over the field.

According to an embodiment of the apparatus according to the invention the furrow compactor comprises at least two wheels, said wheels being arranged on both sides of a movement part of the furrow opener. Advantageously, these wheels may securely compact the soil surrounding the seedling without damaging the seedling.

According to a further embodiment of the apparatus according to the invention said coupling mechanism urges said wheels of said furrow compactor against the soil besides the furrow so that the seedlings conveying device coupled to at least one of the wheels has a constant height over the soil when the apparatus is moved over the field.

According to a further embodiment of the apparatus according to the invention said coupling mechanism urges said wheels of said furrow compactor against the soil so that the wheels compact the soil surrounding the seedling with constant strength when the apparatus is moved over the field.

By means the above-mentioned embodiments a rather precise seedlings deposit and planting operation is achieved. In particular, if there are irregularities or bumps on the surface of the field plating of the seedlings with a variable deepness is avoided. Therefore, a standard deepness planting of the seedlings is achieved. In particular the seedlings conveying device leverages height and thus provide two characteristics: The seedlings are planted with a regular deepness and with a regular compaction strength, regardless of soil irregularities.

According to another embodiment, the apparatus further comprises a tray for holding a plurality of seedlings. Said seedling conveying device can be adapted to automatically take seedlings from the tray. According to the invention the seedlings may be fed manually to the seedling conveying device which then puts the seedlings manually or automatically in the furrow. Furthermore, according to another embodiment, the seedling conveying device is adapted to automatically take seedlings from the tray and to put them in the furrow. Therefore, the seedlings are delivered to the seedling pushing mechanism by the seedling conveying device.

In particular, the seedlings conveying device can comprise a clamp unit for holding the seedling and putting the seedling in the furrow. Preferably, the clamp unit is adapted to clamp the bale of the seedling. In this case, the fragile stem of the seedling may not be damaged. The clamp unit may be fed by seedlings manually or the clamp unit may automatically take seedlings from the tray.

According to a further embodiment of the apparatus according to the invention the coupling mechanism couples the clamp unit of the seedlings conveying device and the furrow compactor.

According to an embodiment of the apparatus according to the invention said coupling mechanism urges said furrow compactor against the soil besides the furrow so that the clamp unit coupled to the furrow compactor has a constant height over the soil when the apparatus is moved over the field.

By means of these embodiments a rather precise seedlings deposit and planting operation is achieved. In particular, if there are irregularities or bumps on the surface of the field plating of the seedlings with a variable deepness is avoided. Therefore, the seedlings are planted with a regular deepness, regardless of soil irregularities.

This coupling mechanism preferably comprises a spring mechanism. The spring mechanism urges the furrow compactor, in particular the wheels of the furrow compactor, against the soil beside the furrow so that the seedlings conveying device, in particular the clamp unit, coupled to the furrow compactor, in particular at least one of the wheels, has a constant height over the soil when the apparatus is moved over the field. In addition, the spring mechanism urges the furrow compactor, in particular the wheels, against the soil so that the furrow compactor, in particular the wheels, compacts the soil surrounding the seedling with constant strength when the apparatus is moved over the field. By this means a rather precise seedlings deposit and planting operation is achieved. In particular, if there are irregularities or bumps on the surface of the field plating of the seedlings with a variable deepness is avoided. Therefore, a standard deepness planting of the seedlings is achieved.

According to the invention, the clamp unit leverages height and thus provide two characteristics: The seedlings are planted with a regular deepness and with a regular compaction strength, regardless of soil irregularities.

According to the invention the furrow is automatically opened by the apparatus. Furthermore, the furrow is closed, leveraged and compacted.

According to a further embodiment of the present invention said coupling mechanism is a pantographic device. A pantograph device provides a mechanical linkage connected in a manner based on parallelograms so that the movement of one part produces identical, scaled movements of the other part.

Moreover, the apparatus can comprise a spraying device for applying a fertilizer, an insecticide, a fungicide, and/or a nutrient to the soil. According to a further embodiment of the present invention the apparatus comprises a tank for insecticides and a tank for fungicides both coupled to the spraying device. The spraying device is adapted to apply both insecticide and fungicide to the seedling in the soil. Therefore, the apparatus can carry out the spraying process of both insecticide and fungicide to the planted seedlings with just one single piece of equipment. Therefore, the apparatus may provide an integrated seedling treatment that enhances the survival rate of the transplanted seedlings.

In addition, the apparatus of the present invention may comprise means for applying nutrition and fertilizers for the planted seedlings. For the nutrition and fertilizers additional tanks may be to provide it.

Moreover, the apparatus may comprise a water tank coupled to the spraying device. In this case the spraying device is further adapted to apply water to the soil surrounding the seedling. Water is therefore used for humidity supply and for compacting the soil further after the planting process.

According to a further embodiment of the present invention the apparatus comprises means for deploying superabsorbers to the surrounding of the seedling being placed on the soil. The superabsorbers may be used as substrate for the seedlings. It may supplement the soil surrounding the seedlings or replace such soil.

According to an embodiment of the present invention, the tray is adapted to hold and deliver sugar cane seedlings to the soil.

Furthermore, the means for moving the apparatus over the field preferably comprises wheels, in particular dynamic traction wheels. Such wheels are mounted at the frame of the apparatus so that they can be pivoted in order to balance irregularities of the soil on which the apparatus is moved.

The present invention further relates to the use of the apparatus described above for plating a seedling of a graminaceous plant, in particular a seedling of a sugar cane plant.

Embodiments of the present invention are now described with reference of the drawings.
- Figure 1: shows a perspective view of a first embodiment of the apparatus according to the present invention,
- Figure 2: shows another perspective view of the first embodiment of the apparatus of the present invention,
- Figure 3: shows a side view of the first embodiment of the apparatus of the present invention,
- Figure 4: shows a rear view of the first embodiment of the apparatus of the present invention,
- Figure 5: shows a front view of the first embodiment of the apparatus of the present invention,
- Figure 6: shows the furrow compactor of the first embodiment of the apparatus of the present invention,
- Figure 7: shows a detail of the furrow compactor of the first embodiment of the apparatus of the present invention,
- Figure 8: shows a dynamic traction wheel of the first embodiment of the apparatus of the present invention,
- Figures 9: and 10 illustrate the function of the coupling mechanism of the first embodiment of the apparatus of the present invention,
- Figure 11: shows a detail of the coupling mechanism shown in Figures 9 and 10,
- Figure 12: shows a perspective view from the front of a second embodiment of the apparatus according to the present invention,
- Figure 13: shows a perspective view from behind of the second embodiment of the apparatus according to the present invention,
- Figure 14: shows a bottom view of the second embodiment of the apparatus of the present invention,
- Figure 15: shows a side view of the second embodiment of the apparatus of the present invention, further showing the ground level,
- Figure 16: shows the furrow opener of the second embodiment of the apparatus of the present invention,
- Figure 17: shows another view of the furrow opener of the second embodiment of the apparatus of the present invention,
- Figure 18: shows the dynamic traction wheel of the second embodiment of the apparatus of the present invention,
- Figure 19: shows the transplanting part of the second embodiment of the apparatus of the present invention,
- Figures 20 and 21: show an example arrangement of the seedling conveying device and the seedling pushing mechanism
- Figures 22A and 22B: show the action of the seedling pushing mechanism.

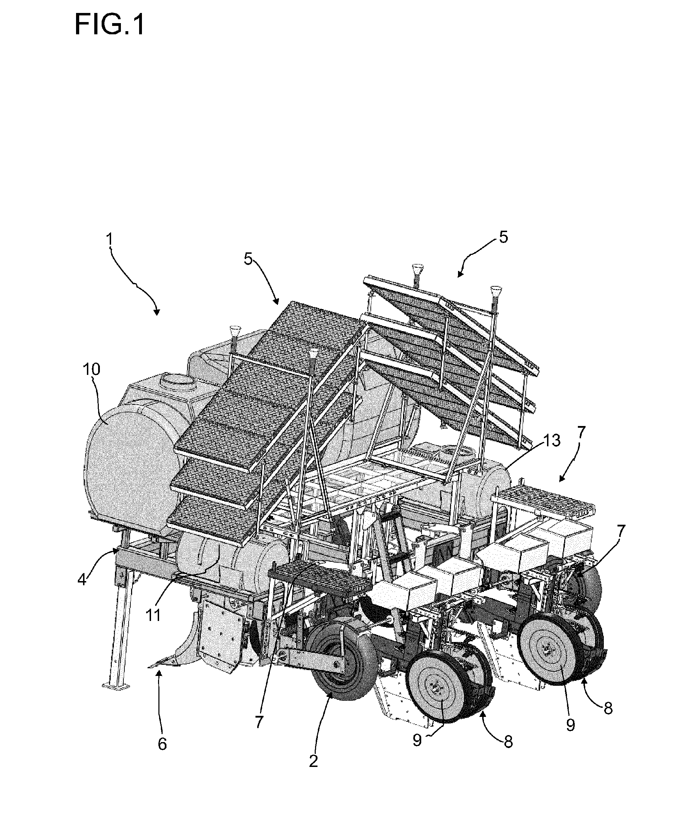

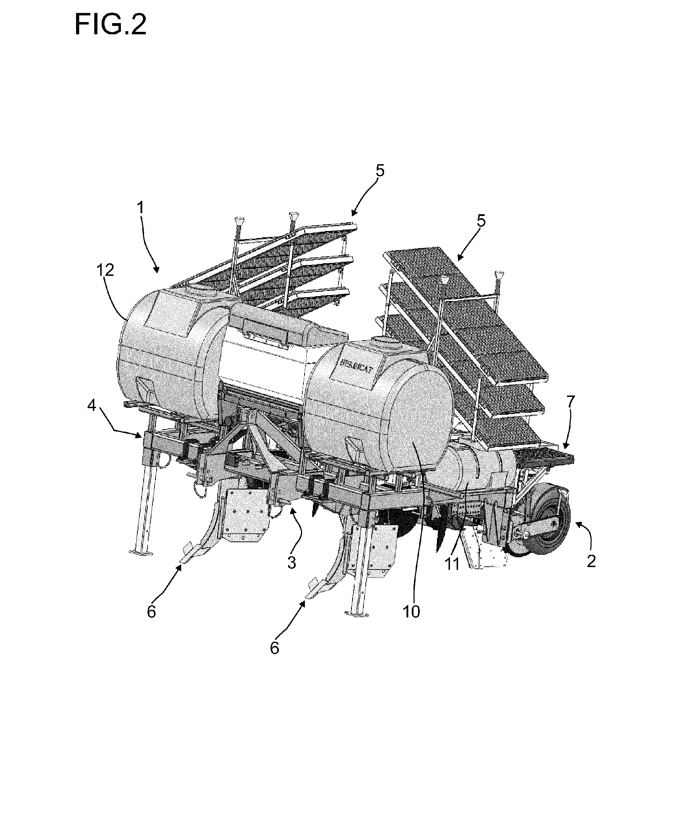

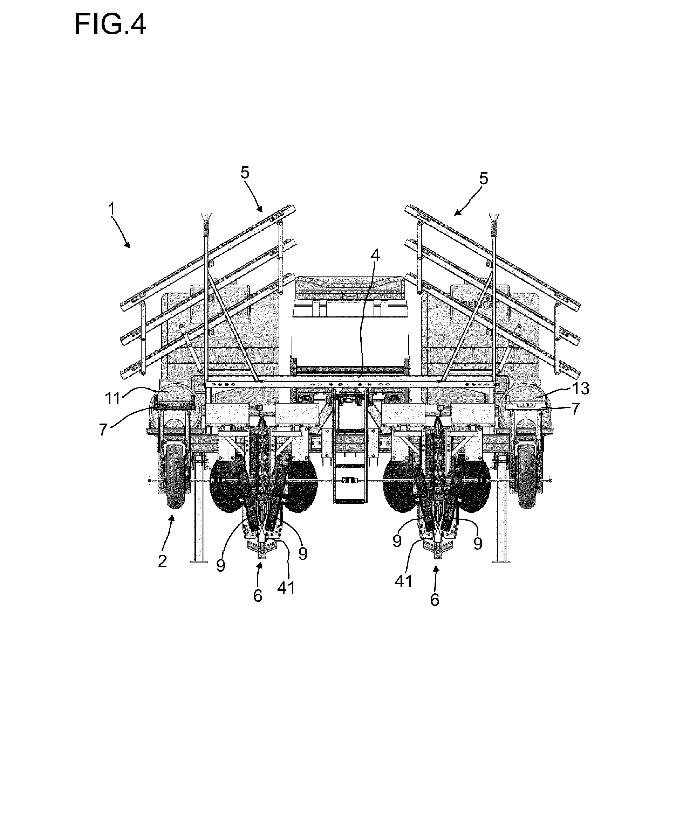

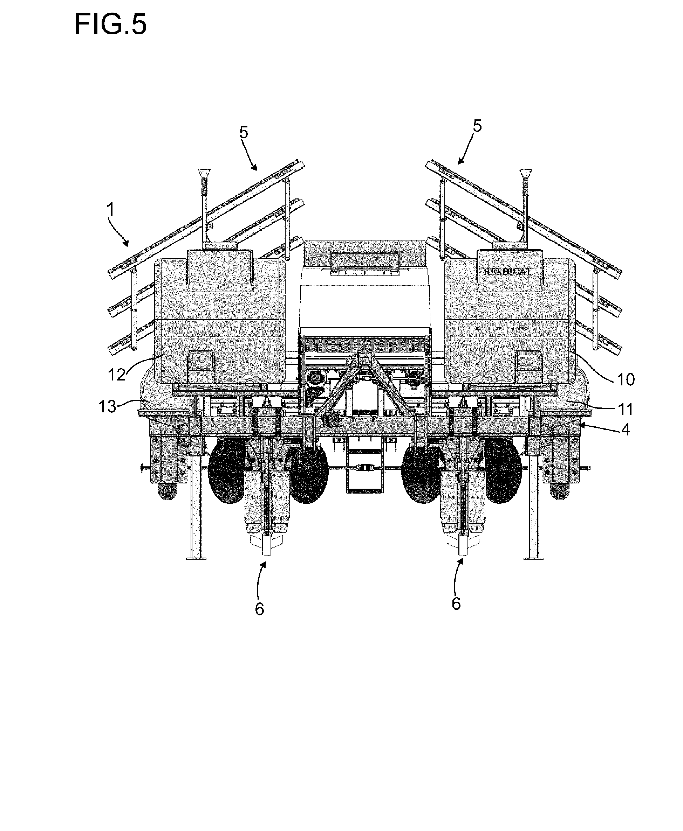

With reference to Figures 1 to 5 the general structure of the first embodiment of the apparatus 1 for planting seedlings is described:

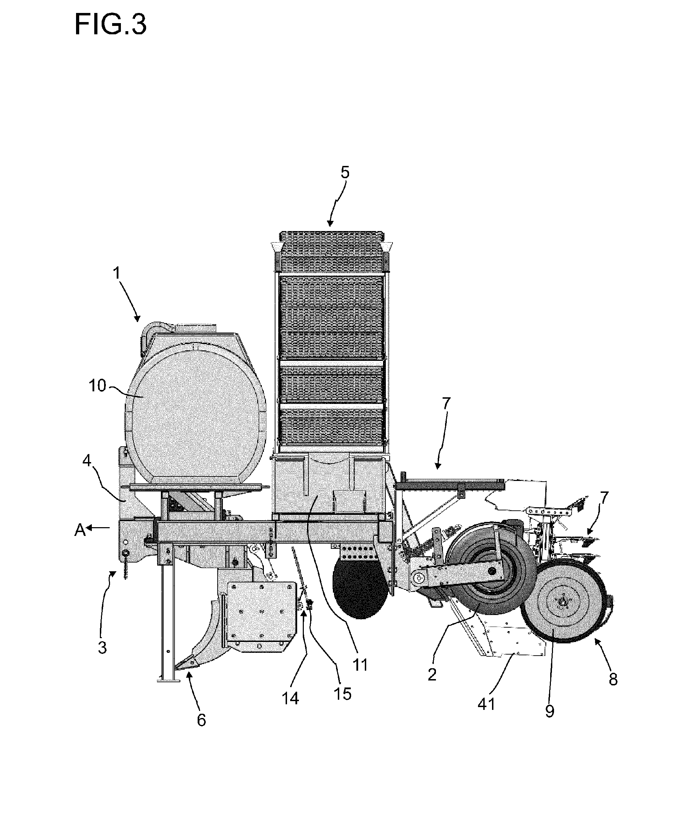

The apparatus 1 comprises dynamic traction wheels 2 for moving the apparatus 1 over a field with soil in which seedlings are to be planted. On the front side of the apparatus 1 a hitch 3 is provided. The hitch 3 is mounted to a frame 4 of the apparatus. The hitch 3 may be coupled, for example, to a tractor so that the apparatus 1 may be drawn by the tractor over the field in the direction of the arrow A as shown in Figure 3.

The apparatus 1 comprises two furrow openers 6. The furrow openers 6 may be pushed into the soil when the apparatus 1 is moved over the field. The furrow openers 6 then lifts the soil out and moves it to both sides of the furrow openers 6 so that two furrows are formed behind the furrow openers 6. The furrow openers 6 are made from non-stick material having an ultra high molecular weight. The furrow that is formed by the furrow openers 6 has a deep of approximately 30 to 35 cm with a significant parcel of soil returning to the furrow with 7 cm to 15 cm so that the seedlings will be well compacted in soil as described later. Furthermore, there will be an extra 15 cm to 20 cm of soil above the ground level in which the seedlings are planted in order to avoid any damage of the seedlings by bouncing, pending and/or rain.

Furthermore, the frame 4 further holds several trays 5 for the seedlings. The trays 5 are adapted to hold seedlings of a sugar cane plant. The trays 5 are movable so that the seedlings that are placed on the trays 5 can be taken away from the trays 5.

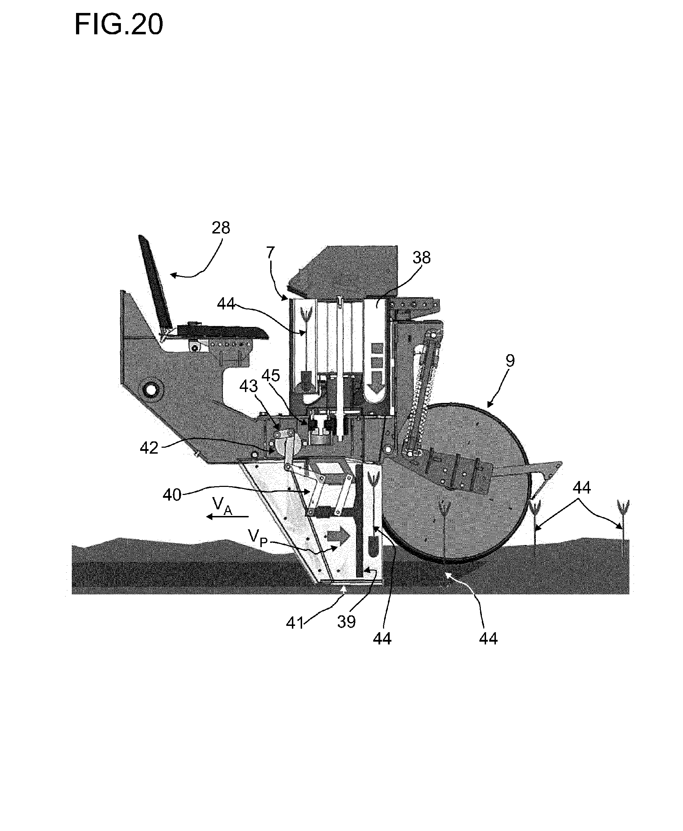

The apparatus 1 further comprises a seedlings conveying device 7 that is adapted to automatically take seedlings from the trays 5 and put them on the horizontal plate 41 just above the furrows that are formed behind the furrow openers 6. The seedlings conveying device 7 comprises a platform as well as a clamp unit 16, which is described in further detail later. The seedlings conveying device 7 grabs the bale of the seedlings as gentle as possible in order to avoid any damage of the seedlings. The seedlings are then moved down towards the open furrow and placed on the horizontal plate 41. The seedling pushing mechanism (see Figure 20) pushes the seedling 44 onto the soil in the furrow so that the seedlings may be planted, as described later.

Alternatively, the seedlings are removed manually from the trays 5 and placed on the platform of the seedlings conveying device 7 where they are grabbed by the clamp unit 16.

The apparatus 1 further comprises a furrow compactor 8. The furrow compactor 8 comprises two wheels 9 that are arranged on both sides of the movement paths of each furrows opener 6. The two wheels 9 of the furrow compactor 8 urge the soil that has been moved out of the furrow by the furrow opener 6 back to the furrow in the surrounding of the seedlings that are placed within the furrow. The soil surrounding the planted seedlings is then compacted by the wheels 9.

The apparatus 1 is not only adapted for planting seedlings in the field but also to treat the planted seedlings in order to raise the survival rate of the seedlings. For this purpose a tank 10 for water, a tank 11 for insecticide, a tank 12 for fertilizer and a tank 13 for fungicide is mounted on the frame 4 of the apparatus 1. The tanks 10 to 13 are coupled to a pipe system that connects the tanks 10 to 13 to a spraying device 14 comprising spraying valves 15 that are controlled by a control unit (not shown).

After the seedlings have been placed in the open furrow they may be treated by an insecticide, a fertilizer and a fungicide that may be sprayed to the planted seedlings by the spraying device 14. Furthermore, water may be sprayed to the seedlings for humidity supply and for compacting the soil after the planting process.

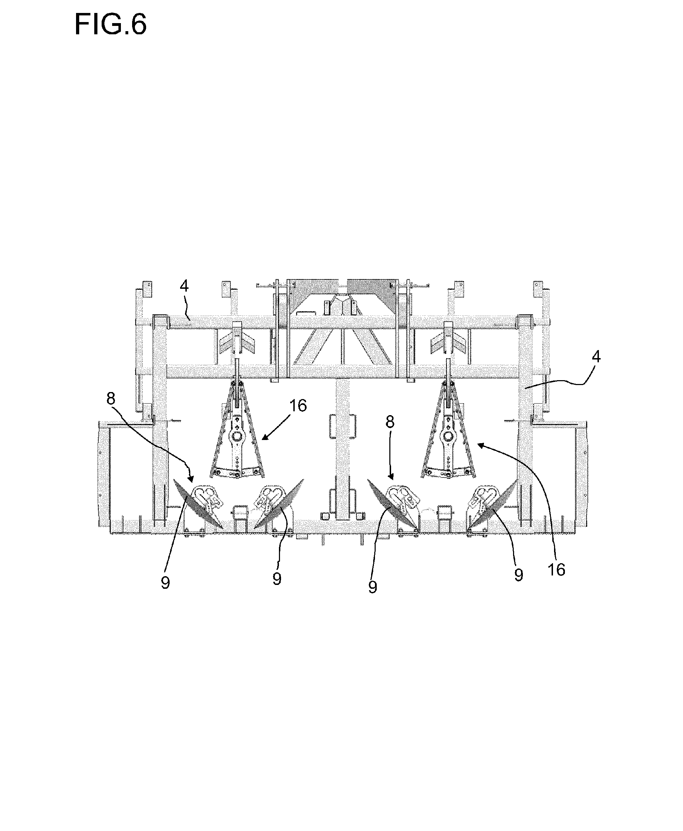

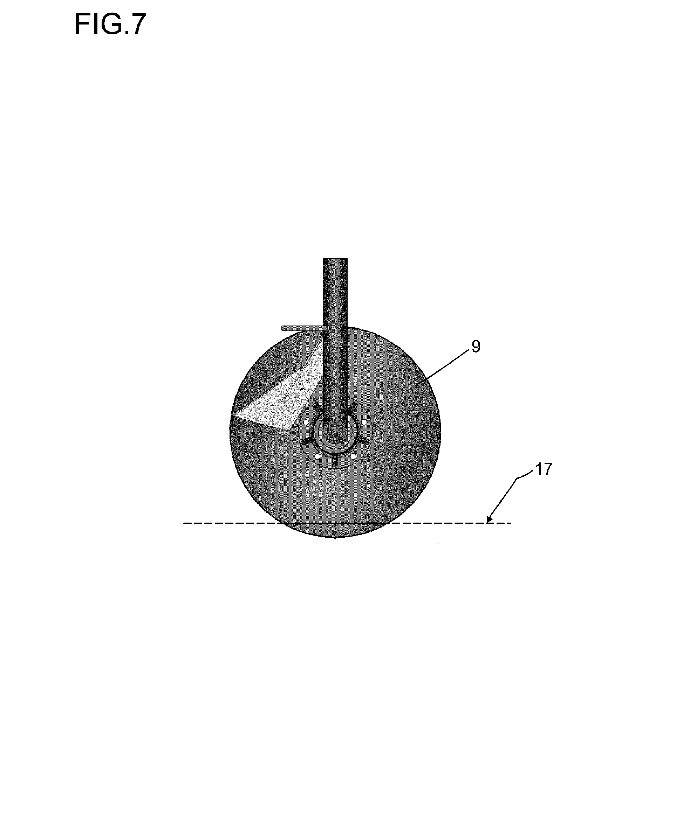

With reference to Figs. 6 and 7 the function of the furrow compactor 8 is described in detail:
After the seedlings have been pushed onto the soil in the furrow by the seedling pushing mechanism the furrow compactor 8 urges the soil back into the furrow and compacts the soil in the surrounding of the planted seedlings. For this purpose, two inclined wheels 9 are placed on both sides of the movement part of the furrow opener 6. As shown in Figure 6 the axis of the wheels 9 are inclined by an angle of 45 degrees against the vertical direction. Furthermore, a section of the wheels 9 is placed below ground level 17 as shown in Figure 7.

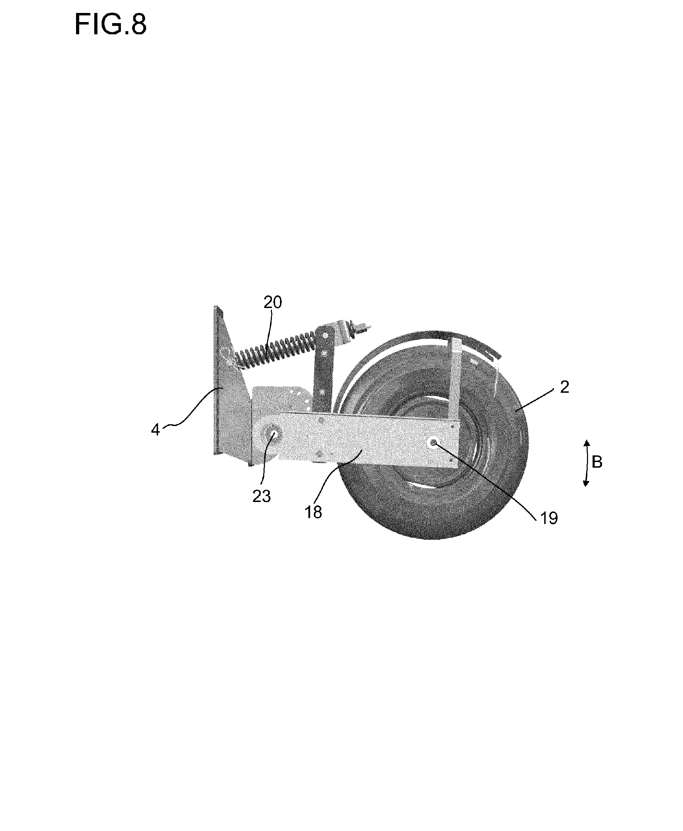

With reference to Figure 8 the function of the dynamic traction wheel 2 is described in detail:
The wheel 2 is rotatably mounted on an axis 19. This axis 19 is supported by a lever 18 which on the other hand is pivotally amounted on a further axis 23. This structure is mounted on the frame 4 of the apparatus 1. Furthermore, the lever 18 is coupled to one end of a spring 20. The other end of the spring 20 is coupled to the frame 4 so that the spring 20 urges the wheel 2 mounted to the lever 18 downwards. By this mechanism the dynamic traction wheel 2 balances irregularities of the soil over which the apparatus 1 is moved by pivoting the wheel 2 against the force of the spring 20 in the direction of a arrow B as shown in Figure 8. In particular, irregularities having a height of about 200 mm may be balanced.

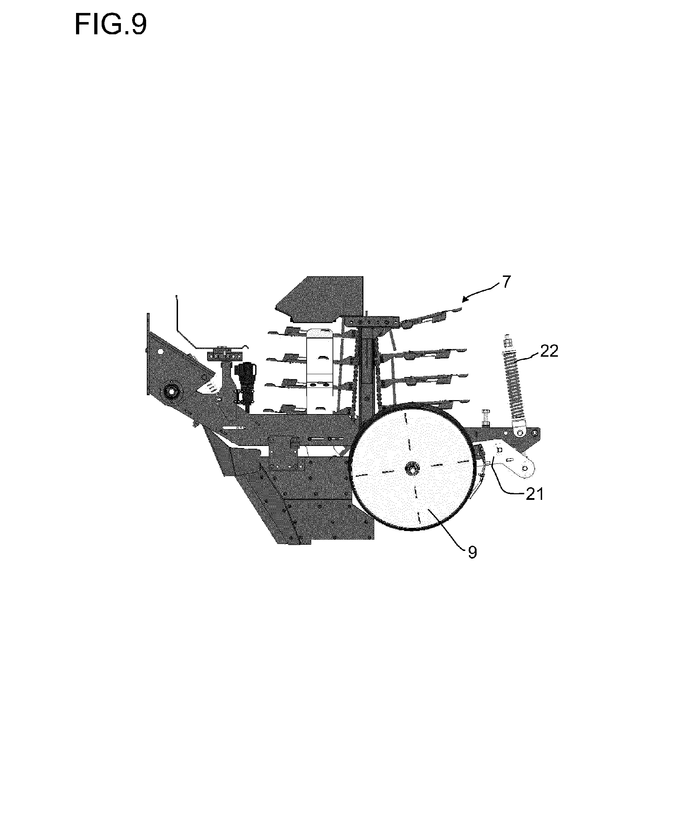

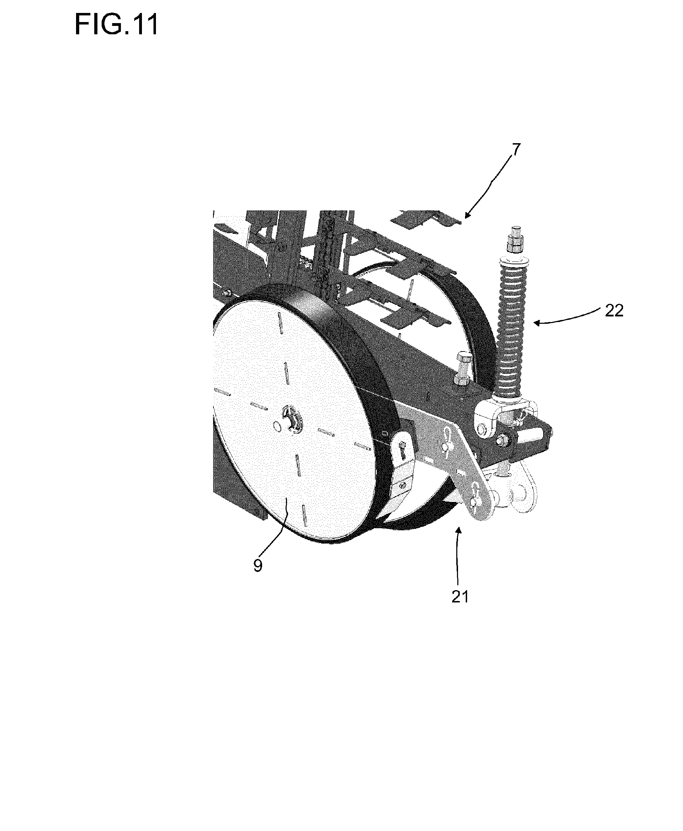

With reference to Figures 9 to 11 the coupling mechanism 21 is described in detail:
If there are irregularities like bumps on the soil over which the apparatus 1 is moved the problem occurs that seedlings are deposited with a variable deepness while there should be standard deposition. By means of the coupling mechanism 21 the seedlings conveying device 7, in the present embodiment the clamp unit 16 of the seedlings conveying device 7 (see Figure 6), on the one hand and the furrow compactor 8 on the other hand are coupled so that two objects are achieved: Firstly, the seedlings are placed in the furrow with a regular deepness and, secondly, with a regular compaction strength regardless of soil irregularities. The coupling mechanism 21 acts like a pantographic movement with a certain degree of freedom.

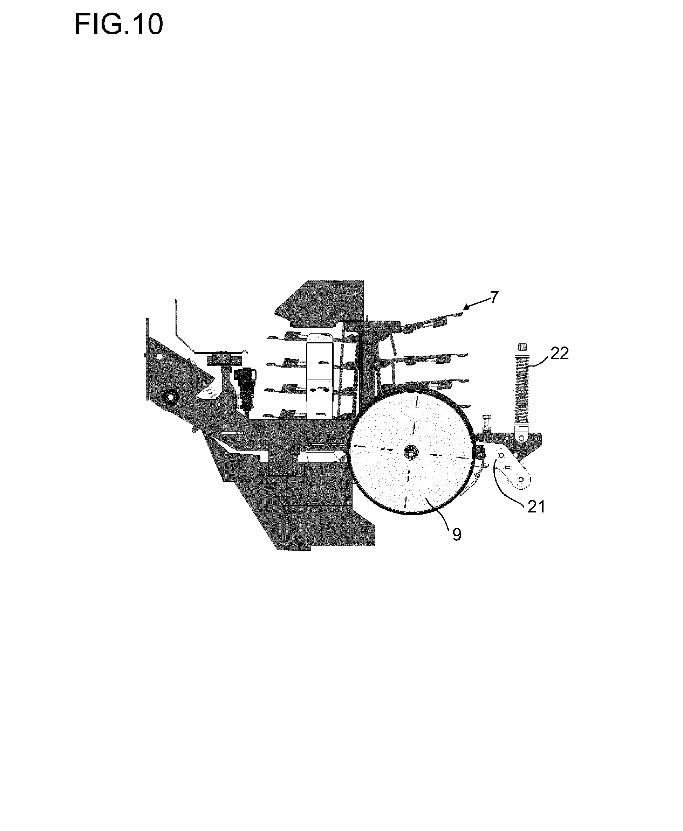

The coupling mechanism 21 comprises a spring mechanism 22 urging the wheels 9 of the furrow compactor 8 against the soil beside the furrow so that the clamp unit 16 that is coupled to the wheels 9 has a constant height over the soil when the apparatus 1 is moved over the field. Furthermore, the spring mechanism 22 urges the wheels 9 against the soils so that the wheels 9 compact the soil surrounding the seedlings with constant strength when the apparatus 1 is moved over the field. Figures 9 and 10 show different positions of the height of the wheels 9 and a corresponding movement of the coupling mechanism 21 and spring mechanism 22.

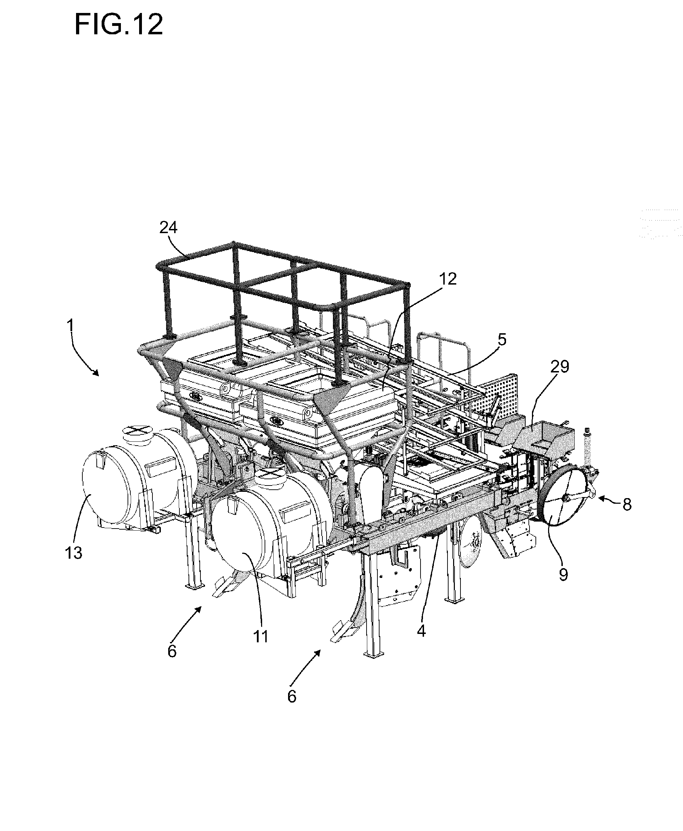

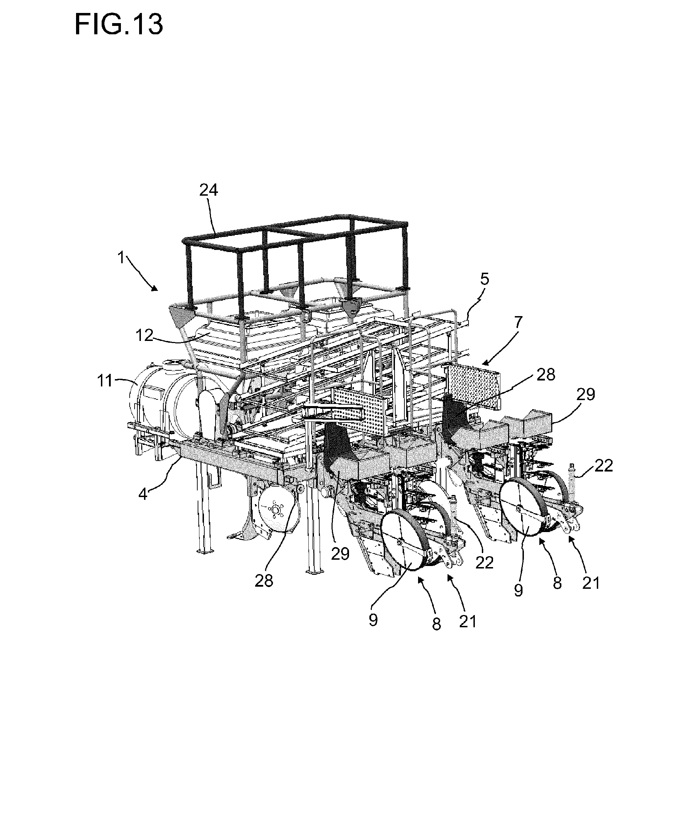

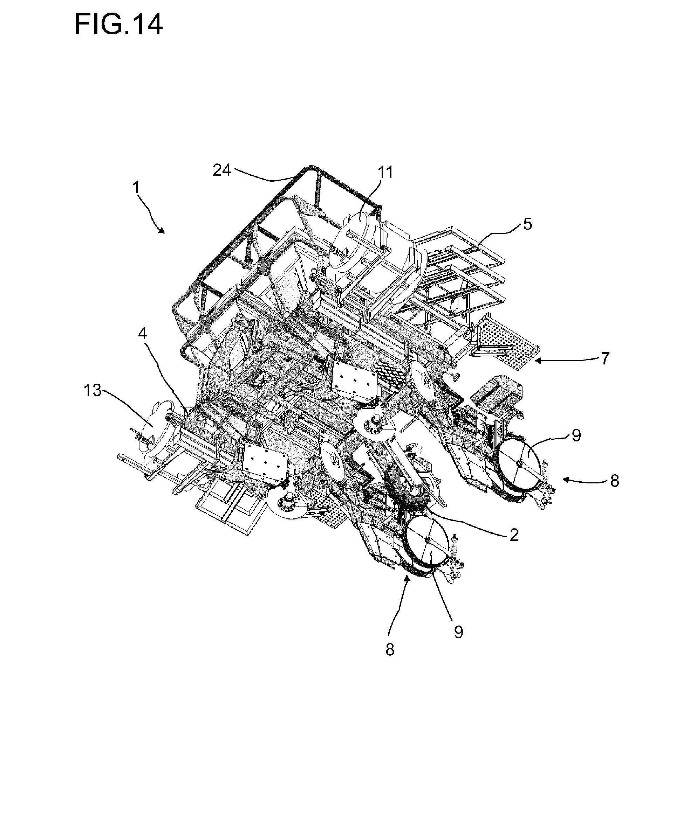

With reference to Figures 12 to 15 the general structure of the second embodiment of the apparatus 1 for planting seedlings is described:
The second embodiment of the apparatus 1 of the present invention is similar to the first embodiment of this apparatus 1 as described above. Therefore, parts of the second embodiment that are identical or similar in function with respect to corresponding parts of the first embodiment are designated with the same reference signs. The description of these parts is omitted in the description of the second embodiment. However, these parts may also be used in the second embodiment. On the other hand, parts that are described in greater detail with respect to the second embodiment may also be used alone or in connection with other parts in the first embodiment.

The apparatus 1 of the second embodiment does not comprise water tanks anymore. Instead the capacity for the chemical tanks has been raised compared to the apparatus 1 of the first embodiment. In particular, a large tank 11 for an insecticide and a large tank 13 for a fungicide are provided. Furthermore, tanks 12 are provided for fertilizers. The fertilizer tanks 12 may be coupled with bags comprising the fertilizers. For these bags the apparatus 1 of the second embodiment comprises a bag protector 24.

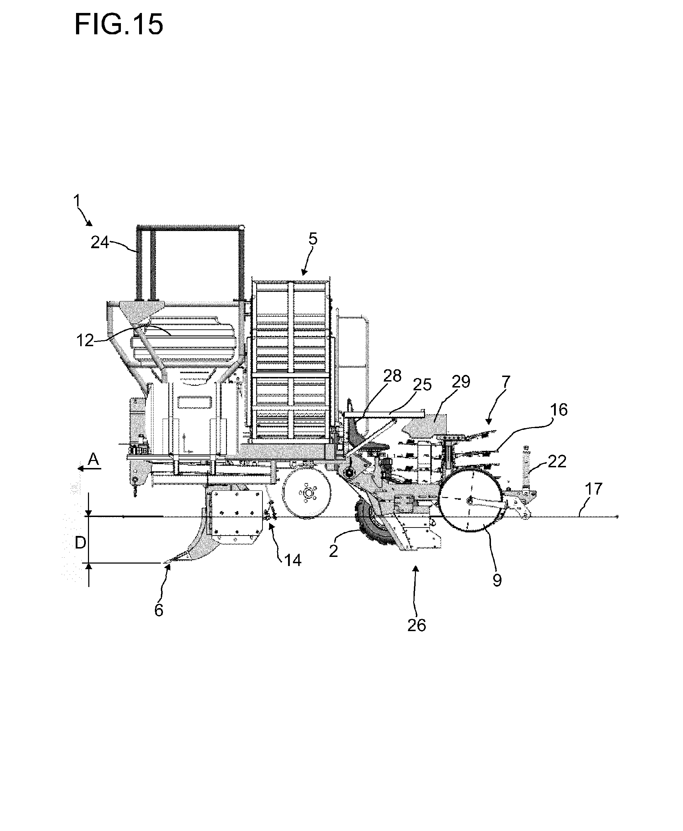

In order to provide better access to the trays 5 for the seedlings a platform 25 is provided that is mounted at the frame 4 of the apparatus 1. Figure 15 shows the position of the apparatus 1 with respect to the ground level 17. As it can be seen in this Figure the furrow opener 6 is arranged below ground level 17. The depth D may vary. In the present case the depth D is 410 mm. Furthermore, the dynamic traction wheels 2 as well as the wheels 9 of the furrow compactor 8 are placed partially below ground level 17.

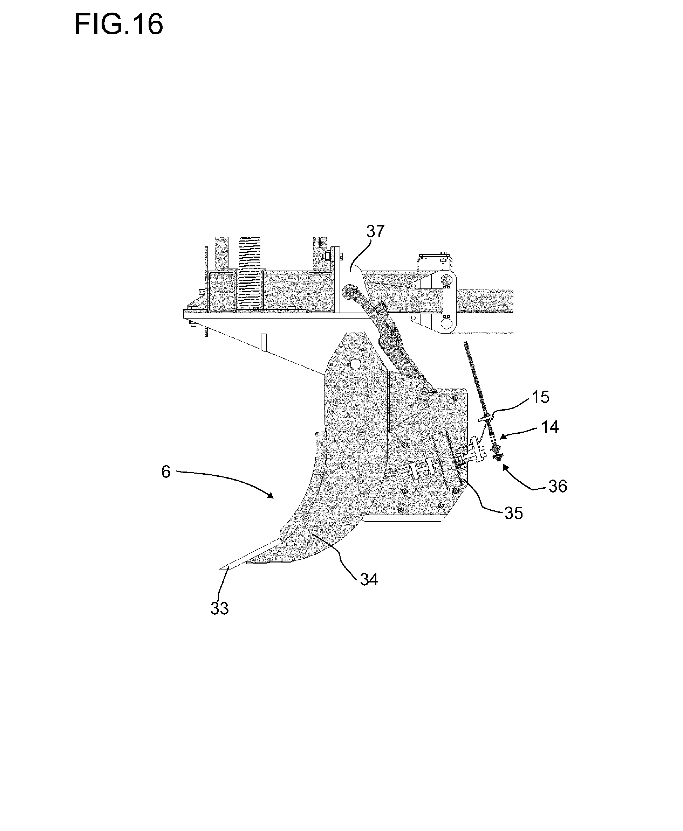

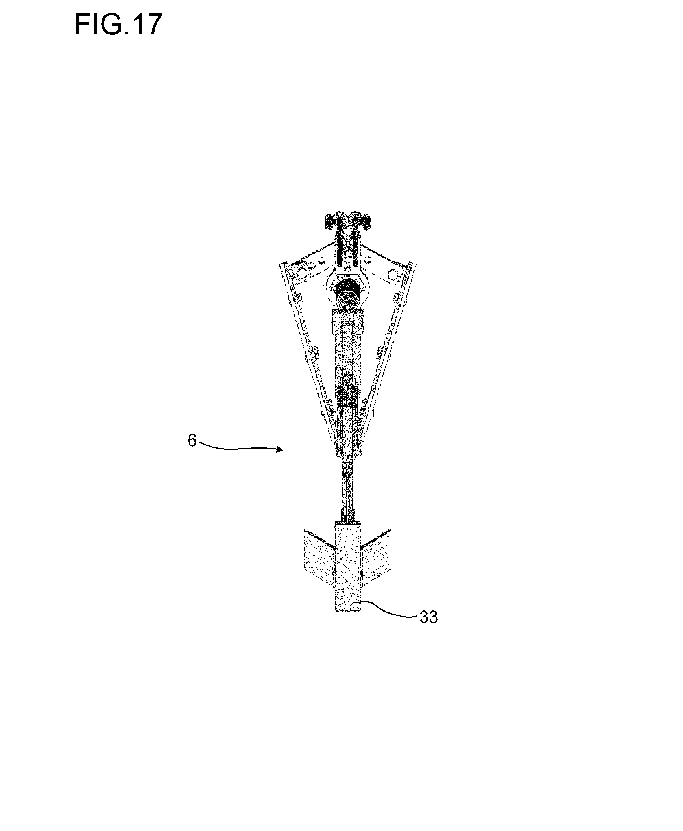

With reference to Figures 16 and 17 details of the furrow opener 6 of the apparatus 1 of the second embodiment are described:
The furrow opener 6 comprises a pointer 33 which is located furthest below ground level 17 as it is shown in Figure 15. The pointer 33 is mounted on a body 34 of the furrow opener 6. The frame 4 of the apparatus 1 comprises a support 37 on which the furrow opener 6 is pivotally mounted.

Furthermore, the spraying device 14 is mounted on the body 34 of the furrow opener 6. The spraying device 14 comprises a fertilizer hose 35 that is connected to spraying valves 15. The fertilizer is feed through fertilizer hose 35 and spraying valves 15 to one or more spray nozzles 36.

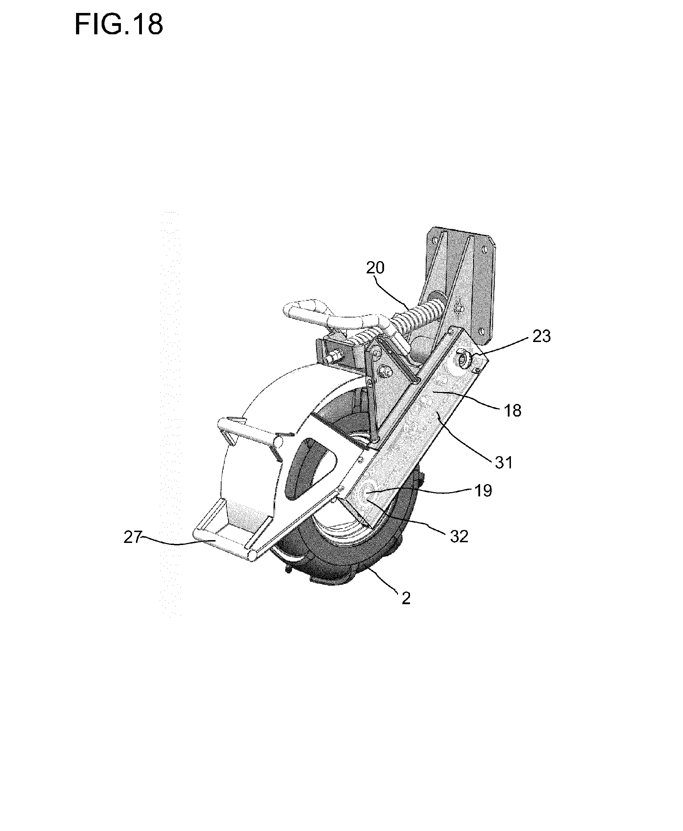

With reference to Figure 18 the dynamic traction wheel 2 of the apparatus 1 of the second embodiment is described in detail:
As already described with reference to Figure 8 of the first embodiment the wheel 2 is mounted on an axis 19. On this axis 19 a return prevention mechanism 32 is arranged that prevents the apparatus from moving against the drawing direction A. Furthermore, axis 23 is provided with a toothed wheel so that a chain 31 may transmit the rotation of the axis 23 to the axis 32 so that the wheel 2 is driven. The driving chain 31 may be coupled to further toothed wheels for transmitting the rotation.

Furthermore, a platform access stair 27 is connected with the support for the dynamic traction wheel 2. This platform access stair 27 facilitates the access to the platform 25.

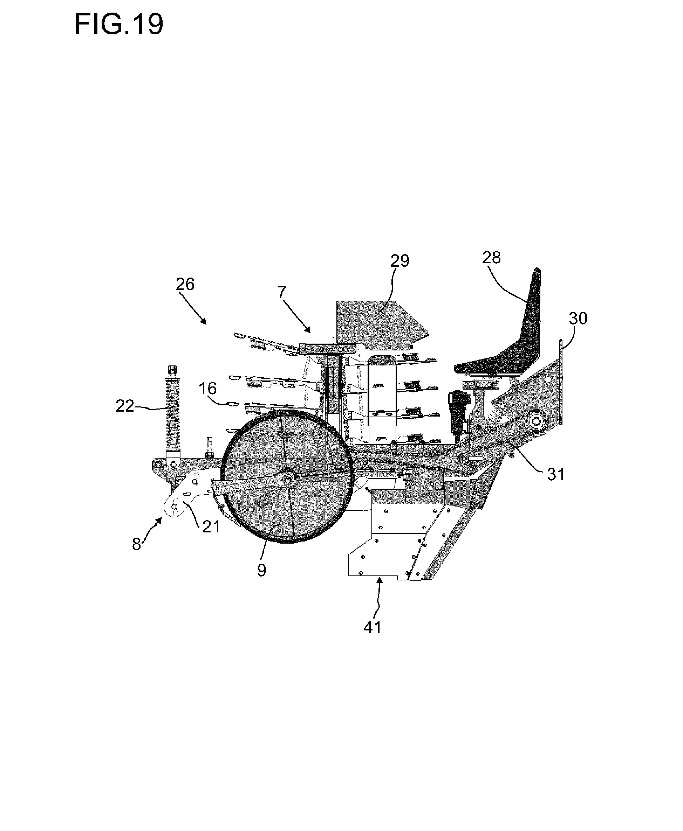

In the apparatus 1 of the second embodiment of the present invention a transplanting cart 26 is removable mounted on the frame 4 of the apparatus 1. This transplanting cart 26 is described with reference to Figure 19:
The transplanting cart 26 comprises the furrow compactor 8 and the seedlings conveying device 7 including the clamp unit 16. Furthermore, an operator seat 28 is mounted on the transplanting cart 26. The operator seat 28 is directed rearwards so that the operator sitting on the operator seat 28 may access seedlings on seedlings platform 29. The operator may place the seedlings on the seedlings conveying device 7 which in turn conveys the seedlings to the open furrow.

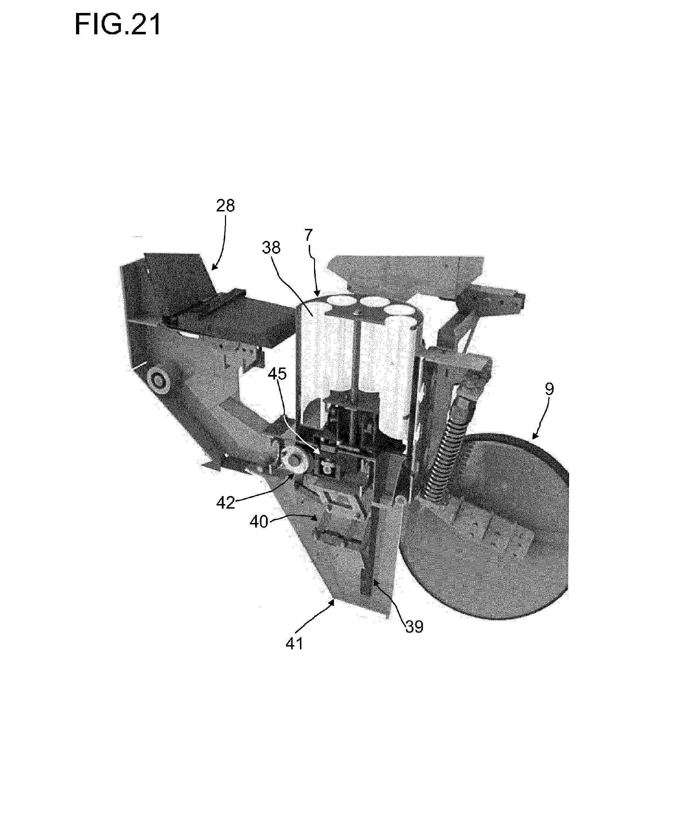

With reference to Figures 20 and 21 an example arrangement of the seedling conveying device 7 and the seedling pushing mechanism are described in detail. This arrangement can be used in connection with any of the embodiments described above. The general process of planting the seedlings 44 is shown in Figure 20, Figure 21 shows the parts in greater detail.

The seedling conveying device 7 comprises a barrel-shaped arrangement of cavities 38, which are adapted in size and shape to take up one seedling 44 in each cavity 38. In the shown example, the cavities 38 are continuous tubes 38 and the seedling 44 can be placed in the tubes 38 from above. If one tube 38 is aligned with a hole at the bottom, the seedling 44 falls through and reaches a horizontal plate 41 that is arranged below the hole, close to the surface of the soil. The barrel can rotate and is to this end coupled to the transmission unit 45, which controls the rotation so that the individual tubes 38 are aligned with the bottom hole at the time when the respective seedling 44 should be planted. At this point, the rotation of the barrel stops and the seedling 44 is conveyed. After that, the rotation continues. The seedlings 44 are conveyed at a frequency that is adapted to the velocity of the apparatus 1 to ensure that the seedlings are planted at even distances from each other.

As with the seedling conveying device 7, the synchronisation of the seedling pushing mechanism is reached by coupling the seedling pushing mechanism to the transmission unit 45, which couples the movement of the apparatus 1 with the seedling pushing mechanism. Therefore, the seedling pushing mechanism is driven by the transmission unit 45 to make sure that the seedlings are pushed and planted at a constant distance from each other. The transmission unit 45 drives an assembly of disks 42, which are mounted eccentrically to each other. A first disk is continuously rotated by the transmission unit 45, while another is turning freely and is connected to the first disk by a linkage 43. Thus, the rotation is transferred to a translation.

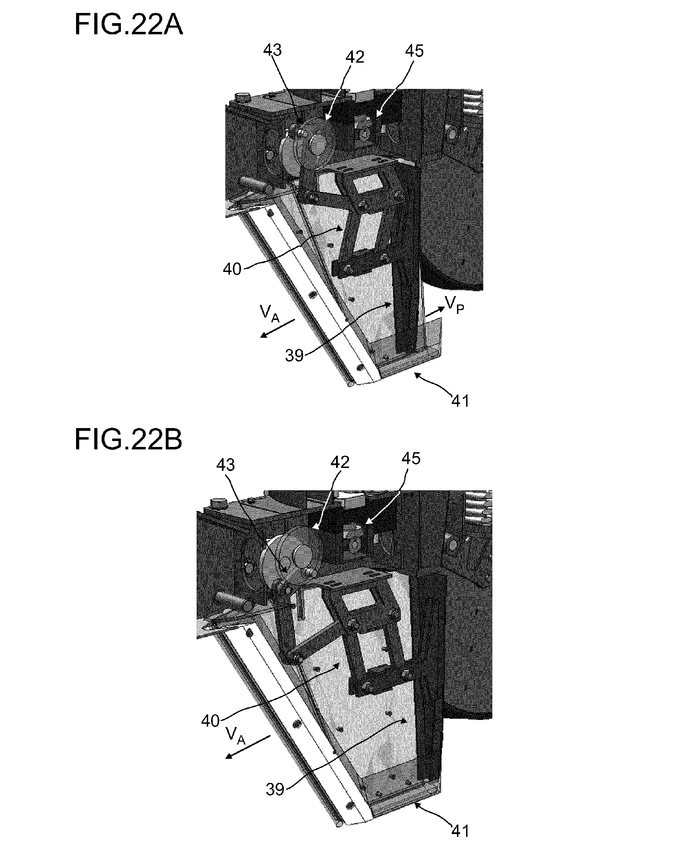

A detailed view of this mechanism is shown in Figures 22A and 22B. The linkage 43 connects the assembly to the pantographic device 40, which moves a vertical plate 39 horizontally back and forth. This vertical plate 39 is arranged above the horizontal plate 41 and serves to push the seedling off the horizontal plate 41 to the soil. In use, the vertical plate 39 moves and reaches the velocity v_{P} at the end of the horizontal plate 41. The absolute value of v_{P} is essentially the absolute value of the velocity of the apparatus v_{A}, but since the velocities point into opposite directions, the effective velocity of the pushed seedling 44 is zero. The push is delivered to make sure that the seedlings 44 are put into the furrow at defined intervals to ensure an even distance between them.

In the shown embodiment, the transmission unit 45 comprises an electronically controlled motor unit. It is also possible to couple the seedling conveying device 7 and the seedling pushing mechanism to the means for moving the apparatus 1 by a mechanical transmission unit.

The seedling conveying device 7 and the seedling pushing mechanism are operated as follows:
The operator of the apparatus 1 places the seedlings 44 in the tubes 38 of the barrel-shaped arrangement. In another embodiment, the feeding of new seedlings 44 to the seedling conveying device 7 is automated.

The barrel-shaped arrangement is then rotated while the apparatus 1 moves over the field as described above so that the tubes 38 are aligned with the bottom hole one after another. Once one of the tubes 38 is aligned with the bottom hole, the rotation of the barrel-shaped arrangement stops for a while although the apparatus 1 still moves further. The respective seedling 44 within that tube 38 then falls from the seedling conveying device 7 onto the horizontal plate 41, which is parallel to and closely above the soil in the furrow. The vertical plate 39 of the seedling pushing mechanism is moving horizontally with the speed v_{P} and thereby pushes the seedling 44 off the horizontal plate 41. The pushing speed v_{P} is synchronised with the movement of the apparatus 1 and with the action of the seedling conveying device 7. It compensates the speed v_{A} of the apparatus 1, i.e., the seedling 44 reaches the furrow at zero velocity. The push is delivered such that the seedlings 44 are planted at a defined distance to each other, independent of the velocity of the apparatus.

Finally, the furrow compactor 9 closes the furrow around the roots of the seedling 44.

The barrel-shaped arrangement is then rotated further while the apparatus 1 moves over the field as so that the next tube 38 is aligned with the bottom hole. Then the next seedling 44 within that tube 38 falls onto the horizontal plate 41 and is planted as described above.

### List of reference signs:

- 1: apparatus
- 2: dynamic traction wheels
- 3: hitch
- 4: frame
- 5: trays for seedlings
- 6: furrow opener
- 7: seedlings conveying device
- 8: furrow compactor
- 9: wheels of furrow compactor
- 10: tank for water
- 11: tank for insecticide
- 12: tank for fertilizer
- 13: tank for fungicide
- 14: spraying device
- 15: spraying valves
- 16: clamp unit
- 17: ground level
- 18: lever
- 19: axis
- 20: spring
- 21: coupling mechanism
- 22: spring mechanism
- 23: axis
- 24: bag protector
- 25: platform
- 26: transplanting cart
- 27: platform access stair
- 28: operator seat
- 29: seedlings platform
- 30: transplanting cart fixing plate
- 31: driving chain
- 32: return prevention mechanism
- 33: pointer
- 34: body of furrow opener
- 35: fertilizer hose
- 36: spray nozzles
- 37: support for furrow opener
- 38: cavity
- 39: vertical plate
- 40: pantographic device
- 41: horizontal plate
- 42: eccentric disk assembly
- 43: linkage
- 44: seedling
- 45: transmission unit
- v_{A}: velocity of the apparatus 1
- v_{P}: velocity of the push

## Claims

1. Apparatus for planting seedlings of an agricultural plant, said apparatus comprising:
- means for moving the apparatus in a first direction over a field with soil in which the seedlings are to be planted and
- a seedling conveying device for conveying individual seedlings at a defined time interval to a seedling pushing mechanism,
- said seedling pushing mechanism being adapted to push the seedling into a second direction that is opposite to the first direction,
- wherein the action of the seedling conveying device and the action of the seedling pushing mechanism are synchronised with each other.

2. Apparatus according to claim 1, wherein said seedling pushing mechanism is adapted to push the seedling in the second direction with the absolute value of the apparatus' velocity relative to the soil.

3. Apparatus according to claim 1 or 2, comprising coupling means to couple said seedling conveying device and said seedling pushing mechanism with said means for moving the apparatus, such that seedlings are planted in the soil at a defined spatial distance.

4. Apparatus according to claim 3, wherein said coupling means constitute a mechanical transmission unit.

5. Apparatus according to any of claims 1 to 4, further comprising a horizontal plate, wherein said seedling conveying device is adapted to put the seedlings on the horizontal plate, and said horizontal plate is located relative to said seedling pushing device so that the seedling pushing mechanism pushes the seedling off said horizontal plate.

6. Apparatus according to any of claims 1 to 5, wherein said seedling pushing mechanism comprises a vertical plate, wherein said seedling pushing mechanism is adapted to move said vertical plate horizontally in the second direction.

7. Apparatus according to any of claims 1 to 6, wherein said seedling pushing mechanism comprises a pantographic device that is driven by an eccentric disk plate arrangement comprising two rotating disks being arranged eccentrically to each other and coupled by a linkage.

8. Apparatus according to any of claims 1 to 7, wherein said seedling conveying device comprises a rotating barrel with a plurality of cavities for taking up seedlings, wherein the rotation of the barrel is adapted to convey seedlings individually at said defined time interval.

9. Apparatus according to claim 8, wherein the individual seedlings are conveyed by said seedling conveying device by falling from said cavities towards said seedling pushing mechanism.

10. Apparatus according to any of claims 1 to 9, further comprising a furrow opener for automatically creating a furrow in the field when the apparatus is moved over the field.

11. Apparatus according to claim 10, further comprising a furrow compactor that is adapted to close the furrow with soil and to compact the soil surrounding the seedling in the closed furrow.

12. Apparatus according to any of claims 1 to 11, further comprising a tray for holding a plurality of seedlings.

13. Apparatus according to claim 12, wherein said seedling conveying device is adapted to automatically take seedlings from the tray.

14. Apparatus according to any one of claims 1 to 13, wherein said seedlings conveying device is adapted to hold and deliver sugar cane seedlings to the soil.

15. Use of the apparatus as claimed in any one of claims 1 to 14 for planting a seedling of a graminaceous plant, in particular a sugar cane plant.
